# EUROPÄISCHE PATENTSCHRIFT

(11) **EP 2 399 449 B1**
(45) Veröffentlichungstag und Bekanntmachung des Hinweises auf die Patenterteilung: **09.08.2017**
(21) Anmeldenummer: 11004878.2
(22) Anmeldetag: 15.06.2011
(51) Int. Cl.: A01G 1/00, A01G 9/02

(54) **Fassadenbegrünungselement und Fassadenbegrünungssystem**
Façade landscaping element and façade landscaping system
Elément pour faire pousser des plantes sur des façades et système pour faire pousser des plantes sur des façades

(30) Priorität: 22.06.2010 DE 102010024555
(43) Veröffentlichungstag der Anmeldung: 28.12.2011
(73) Patentinhaber: Optigrün international AG, 72505 Krauchenwies-Göggingen (DE)
(72) Erfinder: Henneberg, Martin, 88605 Messkirch (DE)
(74) Vertreter: Tomerius, Isabel

(56) Entgegenhaltungen:
- EP-A2- 1 972 236
- WO-A1-2010/031181
- FR-A1- 2 902 602
- US-A- 2 121 173
- US-A1- 2010 146 855

## Beschreibung

Die Erfindung betrifft ein Fassadenbegrünungselement sowie ein Fassadenbegrünungssystem, welches mehrere der Fassadenbegrünungselemente umfasst. Fassadenbegrünungssysteme dienen dazu, Innen- und/oder Außenwände eines Baukörpers zu begrünen. Hierzu werden beispielsweise Pflanzbehälter, die mit einem Pflanzsubstrat befüllt und bepflanzt sind, an einer Gebäudewand befestigt. Durch Anbringen mehrerer Pflanzbehälter über- und nebeneinander können auf diese Weise ganze Fassaden begrünt werden. Das Anbringen der Pflanzbehälter ist, gerade wenn die Arbeiten in großer Höhe ausgeführt werden müssen, häufig sehr aufwendig. Gleiches gilt für die Wartung der Bepflanzung oder der Pflanzbehälter insgesamt. Das Abnehmen und Austauschen beschädigter Pflanzbehälter ist häufig mit großem Aufwand und hohen Kosten verbunden. Aus der EP 1 972 236 A2 sowie der WO-A-2010/031181 ist ein Begrünungselement mit einer Vorder- und einer Rückplatte bekannt, die in einem Randbereich miteinander verbunden sind und die zur Aufnahme von Pflanzenelementen durch die Vorderplatte hindurch ausgebildet sind. Vorder- und Rückplatte sind hier allerdings ausschließlich im Randbereich verbunden, was die Stabilität, gerade bei großflächigen Begrünungselementen, reduziert. Um die Gebäudewand nicht zu stark mit Gewicht zu belasten, müssen die Pflanzbehälter möglichst leicht konstruiert sein, dabei aber dennoch eine ausreichende mechanische Stabilität und Widerstandsfähigkeit gegen Umwelteinflüsse aufweisen. Zudem sollten die Pflanzbehälter an sich ein attraktives Aussehen aufweisen und sich den gestalterischen Anforderungen und Umgebungsbedingungen entsprechend leicht anpassen lassen. Sie sollten außerdem möglichst wartungsfrei ausgestaltet sein und, gerade in der Anwachsphase der Pflanzen, für eine einfache und automatische Bewässerung der Pflanzen sorgen.

Die bisher bekannten Fassadenbegrünungssysteme erfüllen alle diese Eigenschaften noch nicht vollständig zufriedenstellend. Aufgabe der Erfindung ist es daher, ein Fassadenbegrünungssystem sowie ein in diesem enthaltenes Fassadenbegrünungselement anzugeben, welche die oben genannten Anforderungen erfüllen können.

Die Lösung dieser Aufgabe gelingt mit dem Fassadenbegrünungselement gemäß Anspruch 1 sowie dem Fassadenbegrünungssystem nach Anspruch 9. Bevorzugte Weiterbildungen sind in den Unteransprüchen beschrieben.

In einem ersten Aspekt betrifft die Erfindung also ein Fassadenbegrünungselement, das eine Rückplatte und eine von dieser beabstandete Gitterplatte umfasst. Gitterplatte und Rückplatte sind durch einen Außenrand miteinander verbunden. Die Gitterplatte weist zudem wenigstens eine Öffnung auf, deren Öffnungsfläche größer ist als die übrigen Öffnungen des Gitters. Im Bereich dieser Öffnung ist ein Pflanzkorb angeordnet, der zu der Öffnung hin offen ist. Der Pflanzkorb verbindet Rückplatte und Gitterplatte miteinander.

Das Fassadenbegrünungselement bildet also eine Art von Kassette, in der Rückplatte und Gitterplatte durch den vorzugsweise vollständig umlaufenden Außenrand miteinander verbunden sind. Die Stabilität der Kassette wird dadurch weiter erhöht, dass zwischen Gitterplatte und Rückplatte wenigstens ein Pflanzkorb angeordnet ist, der beide Platten miteinander verbindet. Der Pflanzkorb verhindert also, dass Gitterplatte und Rückplatte auseinandergedrückt werden und das Fassadenbegrünungselement sich aufwölbt. Auch das Nachsacken von Pflanzsubstrat wird auf diese Weise reduziert. Der Pflanzkorb als stabilisierendes Verbindungselement zwischen Rückplatte und Gitterplatte ermöglicht es, dass für die beiden Platten ein relativ leichtes und wenig steifes Material verwendet werden kann, ohne dass dadurch die Stabilität des Fassadenbegrünungselementes leidet. Auf diese Weise ist nicht nur eine Gewichtsreduzierung möglich, sondern auch ein unaufdringlicherer optischer Eindruck erreichbar. Die Verwendung des Pflanzkorbes als Verbindungselement erlaubt es zudem, auf zusätzliche Verbindungselemente zur Erhöhung der Stabilität des Fassadenbegrünungselementes zu verzichten, was einerseits die Montage erheblich erleichtert und andererseits eine weitere Gewichtsreduktion durch Verzicht auf zusätzliche Verbindungselemente gestattet.

Die Anzahl der Pflanzkörbe, welche zwischen Rückplatte und Gitterplatte als Verbindungselemente montiert werden, kann nach Belieben gewählt werden. Sie hängt von der Flächenausdehnung des Fassadenbegrünungselements sowie von der gewünschten Pflanzdichte und der Stabilität der verwendeten Rück- und Gitterplatten ab. Auch die Größe der Pflanzkörbe kann beliebig gewählt werden und richtet sich beispielsweise nach der Art der gewünschten Bepflanzung. Unter dem Gesichtspunkt der vereinfachten Montage des erfindungsgemäßen Fassadenbegrünungselementes ist die Verwendung gleich großer Pflanzkörbe in regelmäßiger Verteilung über die Fläche des Fassadenbegrünungselementes bevorzugt, jedoch nicht Bedingung.

Im fertig montierten Zustand ist das Fassadenbegrünungselement im Bereich zwischen Rückplatte und Gitterplatte mit einem Pflanzsubstrat befüllt. Zur Verbesserung des optischen Eindruckes und um zu verhindern, dass Pflanzsubstrat nach außer heraus fällt, kann die an die Gitterplatte angrenzende Schicht aus einem gekörnten mineralischen Material bestehen. Beispielhaft können Ziegelsplitt, Basaltsplitt, Bimsstein, Lavasplitt, Blähton oder Ähnliches genannt werden. Auch farbige Glasgranulate wie zum Beispiel Blauglas können verwendet werden. Die Maschenweite der Gitterplatte wird entsprechend dem verwendeten Substrat oder gekörnten mineralischen Material angepasst. Die Maschenweite wird zweckmäßig so gewählt, dass kein Befüllungsmaterial aus dem Fassadenbegrünungselement heraus fällt. Zwischen mineralischer Sichtfläche und Pflanzsubstrat kann zusätzlich eine Trennschicht, beispielsweise aus einem insbesondere kapillarbrechenden Gewebe, angeordnet werden. Diese verhindert zum einen das Herausfallen von Substrat noch besser und unterbindet das Ausblühen von Salzkrusten aus im Gießwasser enthaltenen Carbonaten oder anderen Salzen auf der Oberfläche der Mineralschicht. Auch der Bewuchs mit Flechten und Moosen wird reduziert.

Bei der Beschickung des Fassadenbegrünungselements mit Pflanzsubstrat und gegebenenfalls mineralischem gekörnten Material werden üblicherweise die Pflanzkörbe nicht mitbefüllt und bleiben leer. Die Pflanzkörbe werden - zweckmäßig im Anschluss an die Beschickung des restlichen Fassadenbegrünungselementes mit Pflanzsubstrat und gekörntem mineralischen Material - gesondert bepflanzt. Besonders bevorzugt st es dabei, in den Pflanzkorb einen mit der Pflanze bepflanzten vorgefertigten Torftopf oder Ähnliches passender Größe einzusetzen.

Bei diesen jungen Pflanzen, die noch ein unzureichendes Wurzelsystem ausgebildet haben, ist eine konstante Bewässerung besonders wichtig, damit die Pflanzen sicher anwachsen. Um eine ausreichende Bewässerung sicherzustellen, ist es im erfindungsgemäßen Fassadenbegrünungselement bevorzugt, dass der Pflanzkorb auf seiner zur Rückplatte weisenden Seite zumindest teilweise und vorzugsweise vollständig offen ist. Der zur Gitterplatte weisenden Öffnung des Pflanzkorbs liegt damit eine weitere, rückwärtige Öffnung gegenüber. Zwischen dieser rückwärtigen Öffnung und der Rückplatte des Fassadenbegrünungselements verläuft eine Bewässerungsbahn, die bis auf die von der Gitterplatte abgewandte Seite der Rückplatte geführt ist. Die Bewässerungsbahn kann von der Rückseite der Rückplatte her befeuchtet werden. Sie ist so ausgebildet, dass sie durch Kapillarkräfte die Feuchtigkeit auf die Innenseite der Rückplatte und dort zu der rückseitigen Öffnung des Pflanzkorbes hin transportiert. Zu diesem Zweck besteht die Bewässerungsbahn beispielsweise aus einem Vliesmaterial. Eine in den Pflanzkorb eingesetzte Pflanze liegt mit ihrem Pflanzballen unmittelbar an der befeuchteten Bewässerungsbahn an und kann auf diese Weise leicht mit Feuchtigkeit versorgt werden.

Nach einer gewissen Wachstumsphase bildet die Pflanze im Pflanzkorb ein umfangreicheres Wurzelsystem aus. Damit dieses Wurzelsystem sich in das den Pflanzkorb umgebende Pflanzsubstrat hin ausdehnen kann, weist der Pflanzkorb zweckmäßig in seinen zwischen Gitterplatte und Rückwand verlaufenden Seitenwänden Durchwurzelungsöffnungen auf. Diese sind so ausgebildet, dass die Wurzeln der Pflanze im Pflanzkorb durch die Öffnungen hindurch nach außen in das Pflanzsubstrat wachsen können.

In einer bevorzugten Ausführungsform hat der Pflanzkorb des erfindungsgemäßen Fassadenbegrünungselements auf dem der Gitterplatte benachbarten Öffnungsrand befestigte Anpressflächen, die auf der Gitterplatte aufliegen, wenn der Pflanzkorb zwischen Gitterplatte und Rückplatte im Fassadenbegrünungselement befestigt ist. Diese Anpressflächen verteilen den Druck, mit welchem der Pflanzkorb auf die Gitterplatte einwirkt auf eine größere Fläche. So kann das Auswölben der Gitterplatte von der Rückplatte weg noch sicherer verhindert werden, und ein Nachsacken der Substratverfüllung zwischen Gitterplatte und Rückplatte wird sicher vermieden. Wie bereits erwähnt, können auch die Materialstärken von Gitterplatte und Rückplatte vermindert werden, ohne dass die Steifigkeit der Kassette darunter leidet. Die Befestigung des Pflanzkorbs an Gitterplatte und Rückplatte kann auf an sich beliebige Weise erfolgen. Möglich sind beispielsweise Schraub- oder Steckverbindungen.

Die Materialien der einzelnen Komponenten des erfindungsgemäßen Fassadenbegrünungselements können ebenfalls aus einem breiten Spektrum ausgewählt werden. Bevorzugt sind leichte, steife und verwitterungsfeste Materialien. Beispielhaft können witterungs- und UV-beständige Kunststoffe und metallische Materialien, insbesondere Aluminium oder Edelstahl, genannt werden. Besonders bevorzugt besteht beispielsweise die Gitterplatte aus einem Kunststoff- oder Metallgitter, der wenigstens eine Pflanzkorb aus Kunststoff und die Rückplatte aus einem metallischen Material.

Zum Durchführen der Bewässerungsbahn, welche an der rückseitigen Öffnung des Pflanzkorbs anliegt, auf die der Gitterplatte abgewandte Seite der Rückplatte kann in der Rückplatte eine Öffnung vorhanden sein, durch welche die Bewässerungsbahn auf die Rückseitegeführt wird. Bevorzugt ist es jedoch, die Rückplatte ganzflächig und - von den Befestigungsöffnungen abgesehen - geschlossen auszuführen, da dies die Stabilität des Fassadenbegrünungselementes erhöht. In diesem Fall wird die Bewässerungsbahn dann über einen Rand der Rückplatte auf deren Rückseite geführt. Bevorzugt ist dieser Rand der untere Rand, wenn das Fassadenbegrünungselement an einer Gebäudewand aufgehängt ist.

Das Herausführen der Bewässerungsbahn auf die Rückseite der Rückplatte hat den Vorteil, dass die Bewässerung der Pflanzen in den Pflanzkörben von außerhalb des Fassadenbegrünungselementes her erfolgen kann. Diese Entkopplung des Fassadenbegrünungselements und des Bewässerungssystems hat deutliche Vorteile im Bezug auf Wartung und Montage des Fassadenbegrünungssystems. Besonders bevorzugt ist dabei die Bewässerungsvorrichtung in die Tragkonstruktion integriert, an welcher das Fassadenbegrünungselement an der Wand eines Baukörpers befestigt wird. Bevorzugt umfasst die Bewässerungsvorrichtung einen Tropfschlauch, aus dem Wasser auf die Bewässerungsbahn des Fassadenbegrünungselements heruntertropft. Besonders bevorzugt ist es dabei, die Bewässerungsbahn indirekt mit Wasser zu befeuchten. Hierfür ist eine gesonderte Befeuchtungsbahn vorhanden, die ebenfalls geeignet ist, Wasser über Kapillarkräfte zu transportieren. Ein geeignetes Material hierfür ist erneut Vliesmaterial. Diese Befeuchtungsbahn liegt zumindest teilweise an der Bewässerungsbahn des Fassadenbegrünungselementes an und überträgt so Feuchtigkeit auf letztere. Von der Bewässerungsbahn wiederum gelangt dann die Feuchtigkeit auf die Innenseite der Rückplatte und wird dort von der in den Pflanzkorb gepflanzten Pflanze aufgenommen. Die Trennung von Bewässerungsbahn und Befeuchtungsbahn hat den Vorteil, dass das Fassadenbegrünungselement leicht von der Tragkonstruktion abgenommen werden kann, da Bewässerungsbahn und Befeuchtungsbahn lediglich in Berührungskontakt sind. Besonders bevorzugt ist es dabei, dass das Fassadenbegrünungselement lediglich an die Tragkonstruktion eingehängt ist und sonst keine weiteren Befestigungsmittel aufweist.

Sind mehrere Fassadenbegrünungselemente nebeneinander und/oder untereinander an einer Wand befestigt, kann die Bewässerungsvorrichtung so vorgesehen sein, dass sie beispielsweise lediglich die obersten Fassadenbegrünungselemente bewässert. Die Bewässerung der unteren Reihen der Fassadenbegrünungselemente erfolgt dann zweckmäßig derart, dass Wasser, welches aus der Bewässerungsvorrichtung auf die Bewässerungsbahnen der oberen Fassadenbegrünungselemente gelangt ist, von diesen nach unten abtropft und so auf die Bewässerungsbahnen der darunterliegenden Fassadenbegrünungselemente gelangt. Durch Einstellung der geeigneten Bewässerungsmenge kann sichergestellt werden, dass auf diese Weise auch mehrere Reihen übereinander hängender Fassadenbegrünungselemente mit ausreichend Wasser versorgt werden. Um ein zielgerichtetes Abtropfen des Wassers von oben nach unten sicherzustellen, kann an der Rückplatte und/oder den unteren Außenrändern der Fassadenbegrünungselemente wenigstens eine Abtropfkante vorgesehen sein.

Wie bereits erwähnt, sind die Fassadenbegrünungselemente an der Tragkonstruktion, welche wiederum an der Wand des Baukörpers, welcher das Fassadenbegrünungssystem tragen soll, befestigt ist, lediglich eingehängt und ohne weitere Befestigungsmittel befestigt. Um dies zu ermöglichen, weisen die Fassadenbegrünungselemente zweckmäßig eine Form auf, mit der sie sich gegenseitig an der zu begrünenden Wand abstützen und ein Herabfallen von der Wand unmöglich gemacht wird. Konkret weisen die einzelnen Fassadenbegrünungselemente dafür einen Querschnitt auf, der im Wesentlichen parallelogrammartig ist. Schneidet man das Fassadenbegrünungselement in der Hängerichtung, also in Vertikalrichtung im aufgehängten Zustand, und senkrecht zu Gitter- und Rückplatte, steigen die Außenwände, die Gitterplatte und Rückplatte miteinander verbinden, von der an der Wand hängenden Rückplatte in Richtung auf die Gitterplatte nach oben hin schräg an. Hängt man also ein Fassadenelement an einem geeigneten Traghaken der Tragkonstruktion ein, die an der Wand befestigt ist, hintergreift die schräg nach unten in Richtung auf die Wand hin verlaufende Außenkante des oberen Fassadenelementes die schräg nach oben und vorne verlaufende Oberkante des darunterliegenden Fassadenbegrünungselementes. Der untere Bereich des oberen Fassadenbegrünungselementes wird deshalb in Richtung auf die tragende Wand hin gedrückt. Ein Herabfallen von dieser Wand ist also nicht möglich. Umgekehrt kann ein Fassadenbegrünungselement auf einfache Weise durch Herausheben schräg nach oben von der Wand gelöst werden. Der Montageaufwand ist deshalb sehr gering.

Die Erfindung soll nachfolgend anhand von Zeichnungen weiter erläutert werden. Die Zeichnungen sind rein schematischer Natur, und gleiche Bezugszeichen bezeichnen in ihnen gleiche Teile.

In den Zeichnungen zeigen:
- Fig. 1: die perspektivische Ansicht eines Fassadenbegrünungselementes;
- Fig. 2: eine Schnittansicht entlang der Linie A-A der Figur 1;
- Fig. 3(a) und (b): Detailansichten eines Pflanzkorbs, welcher in dem Fassadenbegrünungselement gemäß Figuren 1 und 2 Verwendung findet;
- Fig. 4: eine Schnittansicht entlang der Linie B-B in Figur 1;
- Fig. 5: eine schematische Draufsicht auf ein erfindungsgemäßes Fassadenbegrünungssystem und
- Fig. 6: einen Teil-Längsschnitt entlang der Linie C-C in Figur 5 zur Veranschaulichung der Tragkonstruktion für die erfindungsgemäßen Fassadenbegrünungselemente.

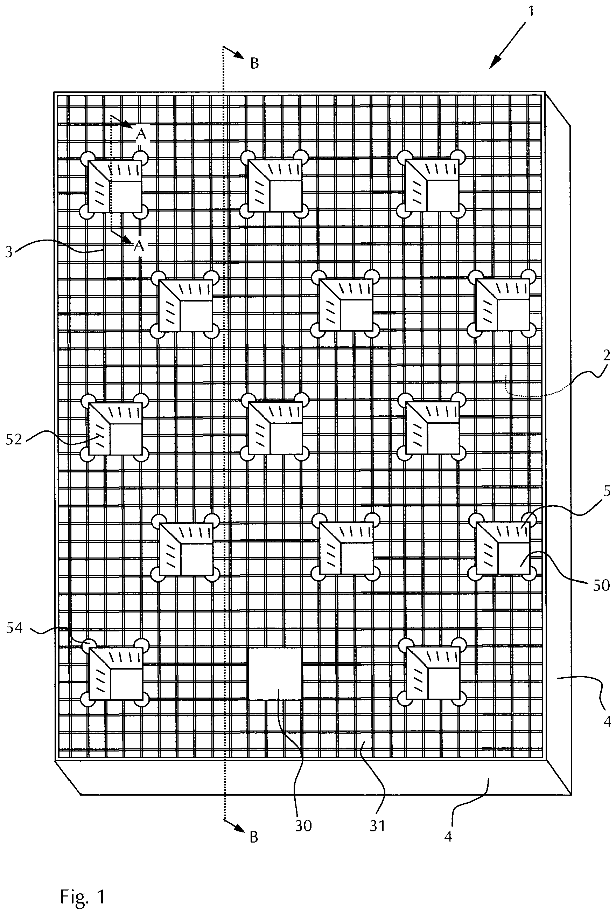

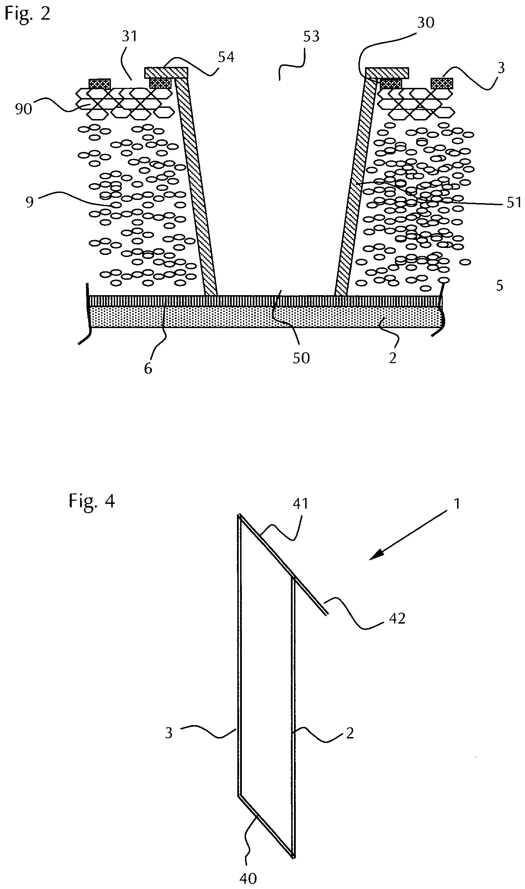

Im Einzelnen zeigt Figur 1 ein Fassadenbegrünungselement 1, welches im Wesentlichen eine rechteckige Grundform aufweist. Der Außenrahmen des Fassadenbegrünungselementes 1 besteht aus einer vom Betrachter aus gesehen hinten liegenden Rückplatte 2, welche beispielsweise von einer durchgängigen Platte aus Edelstahl oder Aluminium gebildet wird. Auf den Betrachter zuweisend und mit einem Abstand zu der Rückplatte 2 ist eine Gitterplatte 3 angeordnet, welche über einen umlaufenden Außenrand 4, beispielsweise ebenfalls aus Edelstahl oder Aluminium, mit der Rückplatte 2 verbunden ist. Die Gitterplatte 3 besteht beispielsweise aus Kunststoff oder einem Maschendrahtgitter mit Maschen 31 einer vergleichsweise engen Öffnungsweite, die verhindert, dass Pflanzsubstrat und/oder gekörntes mineralisches Material wie beispielsweise Gesteinssplitt oder Ähnliches aus dem Inneren des Fassadenbegrünungselementes 1 nach außen herausfallen kann. Innerhalb dieses feinmaschigen Gitters sind mehrere Öffnungen 30 mit einer größeren Öffnungsweite vorhanden. Diese Öffnungen 30 sind in mehreren Reihen übereinander rasterartig über die Gitterplatte 3 verteilt. In die Öffnungen 30 ist jeweils ein Pflanzkorb 5 eingesetzt. Lediglich die untere mittlere Öffnung 30 ist zur besseren Veranschaulichung noch nicht mit einem Pflanzkorb versehen. Die Pflanzkörbe 5 reichen jeweils von der Gitterplatte 3 bis zur Rückplatte 2 und verbinden die beiden Platten miteinander. Auf diese Weise wird verhindert, dass das Gitter 3 von der Rückplatte 2 weg ausgewölbt wird und zwischen beide Platten eingefülltes Pflanzsubstrat (9, siehe Fig. 2) oder mineralisches gekörntes Material (90, siehe Fig. 2) innerhalb des Fassadenbegrünungselementes 1 nach unten sackt.

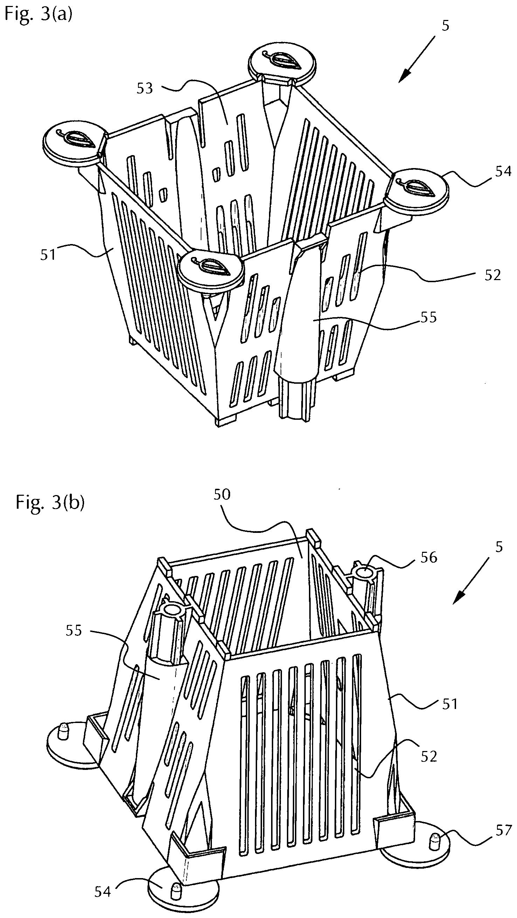

Anbringung und Ausgestaltung des Pflanzkorbs 5 sind in Figuren 2 und 3 näher beschrieben. Der Pflanzkorb 5 ist im Wesentlichen pyramidenstumpfartig ausgebildet. Er weist zwei einander gegenüber liegende Öffnungen 50 und 53 auf, von denen die zur Gitterplatte 3 hin weisende Öffnung 53 mit der Öffnung 30 der Gitterplatte 3 zusammenfällt. Die gegenüber liegende, kleinere Öffnung 50 ist der Rückplatte 2 benachbart angeordnet und von dieser nur durch eine Bewässerungsbahn 6 getrennt, auf die später näher eingegangen werden wird. Die Seitenwände 51 des Pflanzkorbs 5 erstrecken sich zwischen Gitterplatte 3 und Rückplatte 2 und weisen eine Vielzahl langgestreckter Öffnungen 52 auf, die es einer in den Pflanzkorb eingepflanzten und hier nicht dargestellten Pflanze ermöglichen, mit ihren Wurzeln aus dem Pflanzkorb 5 heraus in das benachbarte Pflanzsubstrat 9 einzuwachsen.

Die Befestigung des Pflanzkorbs zwischen Gitterplatte 3 und Rückplatte 2 erfolgt in diesem Fall mittels Schraubverbindungen. Hierfür sind beidseitig an gegenüber liegenden Seitenwänden 51 Schraubaufnahmen 55 vorhanden, in welche durch die Öffnungen 56 hindurch Schrauben von der Rückplatte 2 her in Gewinde innerhalb der Schraubaufnahmen 55 eingeschraubt werden können. Beim Anziehen der Schrauben werden die Anpressflächen 54, die sich auf allen vier stirnseitigen, der Öffnung 53 benachbarten Kanten des Pflanzkorbs 5 befinden, an die Gitterplatte 3 angepresst und ziehen diese in Richtung auf die Rückplatte 2 an. Die Ausrichtung erfolgt mittels Zentrierzapfen 57. Mit ihren relativ großen Auflageflächen stabilisieren die Anpressflächen 54 die Gitterplatte 3 in Bezug auf die Rückplatte 2 und garantieren einen gleichbleibenden Abstand der beiden Platten zueinander.

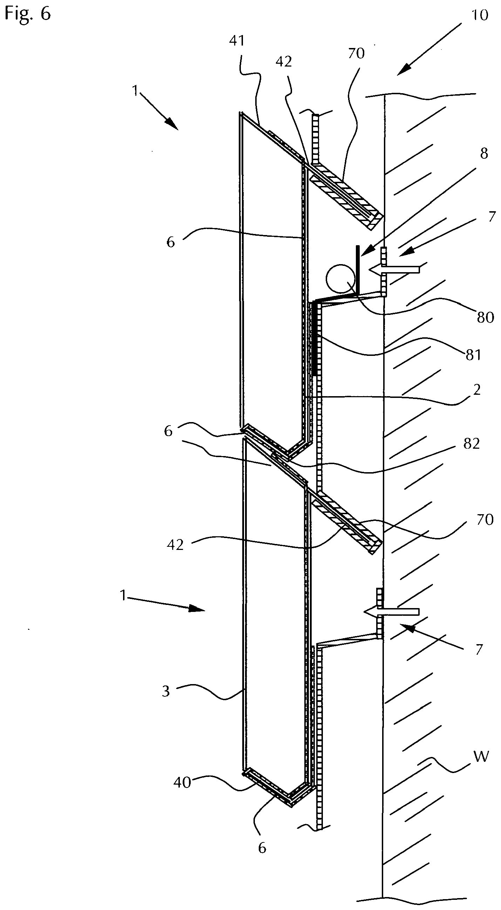

In die Pflanzkörbe 5 des Fassadenbegrünungselements können hier nicht näher dargestellte Pflanzen eingesetzt werden. Bevorzugt sind dies in Torftöpfen geeigneter Form und Größe vorkultivierte Pflanzen. Zweckmäßig werden diese Pflanzen eingesetzt, bevor die erfindungsgemäßen Fassadenbegrünungselemente an einer Fassade angebracht werden. Eine bevorzugte Anbringung ist in Figuren 4 bis 6 beschrieben. Dabei zeigt Figur 4 den Längsschnitt durch ein erfindungsgemäßes Fassadenbegrünungselement 1 entlang der Linie B-B der Figur 1. Die Anordnung der Pflanzkörbe im Inneren des Fassadenbegrünungselementes und die Befüllung sind zur Vereinfachung hier weggelassen. Wie erkennbar, weist das Fassadenbegrünungselement 1 im Längsschnitt senkrecht zu Gitterplatte 3 und Rückplatte 2 eine im Wesentlichen parallelogrammartige Form auf. Die untere Wand 40 und die obere Wand 41 des Außenrandes, welche Rückplatte 2 und Gitterplatte 3 miteinander verbinden, steigen dabei im aufgehängten Zustand des Fassadenbegrünungselementes von der Rückplatte 2 in Richtung auf die Gitterplatte 3 hin schräg nach oben an. Im gezeigten Fall verlaufen dabei die untere Außenwand 40 und die obere Außenwand 41 parallel zueinander. Die obere Außenwand 41 setzt sich dabei über die Rückplatte 2 hinaus schräg nach unten und in Richtung auf die zu begrünende Fassade hin als Halterungsvorsprung 42 fort. Dieser Halterungsvorsprung 42 erstreckt sich bevorzugt im Wesentlichen über die gesamte Breite des Fassadenbegrünungselementes 1. Es können jedoch auch mehrere weniger breite Halterungsvorsprünge 42 verwendet werden. Der Halterungsvorsprung 42 wird bei Befestigung des Fassadenbegrünungselementes 1 in eine passende Aufnahmevorrichtung 70 eingehängt, welche Teil einer Tragkonstruktion 7 ist, die, beispielsweise mittels Dübeln, fest mit der zu begrünenden Fassade verbunden ist (vergleiche Figur 6).

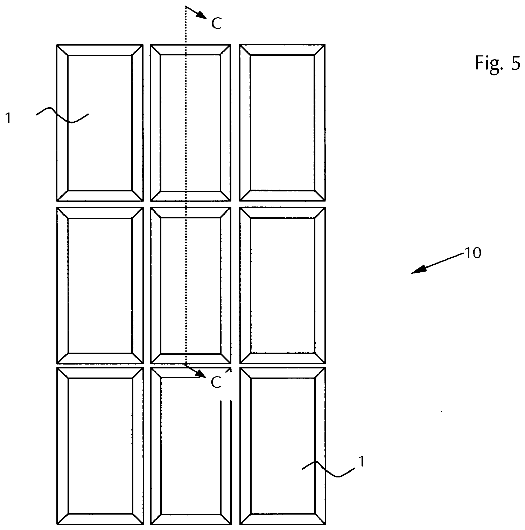

Das Anbringen der erfindungsgemäßen Fassadenbegrünungselemente 1 an der zu begrünenden Fassade erfolgt hier ausschließlich durch das Einhängen der Halterungsvorsprünge 42 in die Aufnahmevorrichtungen 70. Weitere Befestigungselemente sind nicht erforderlich. Die spezielle parallelogrammartige Querschnittsform der Fassadenbegrünungselemente verhindert, dass die Fassadenbegrünungselemente 1 unbeabsichtigt von der Fassade herunterfallen können. Werden mehrere Fassadenbegrünungselemente 1, wie in Figur 5 dargestellt, neben- und übereinander an einer Fassade angehängt und bilden so ein erfindungsgemäßes Fassadenbegrünungssystem 10, drücken sich die Fassadenbegrünungselemente 1 gegenseitig an die Wand W. Wie in Figur 6 erkennbar, hintergreift der untere Teil eines oben hängenden Fassadenbegrünungselementes 1 mit der schräg nach unter verlaufenden Außenwand 40 den oberen Bereich des darunter hängenden Fassadenelementes 1 mit der schräg nach oben verlaufenden oberen Außenwand 41. Die Fassadenbegrünungselemente 1 können sich daher nicht von alleine von der Wand entfernen. Sie können jedoch durch Abheben schräg nach oben von der Wand abgenommen werden. Dies ist sehr einfach und ohne Zuhilfenahme von Werkzeug möglich, so dass eine Wartung und gegebenenfalls Neubepflanzung der Fassadenbegrünungselemente sehr leicht möglich ist.

Figur 6 verdeutlicht außerdem das Bewässerungssystem 8 zur Bewässerung der in den Fassadenbegrünungselementen in den Pflanzkörben eingepflanzten Pflanzen. Die Bewässerung ist zu Beginn der Anbringung der Fassadenbegrünungselemente besonders wichtig, wenn die Pflanzen noch kein vollständig ausgebildetes Wurzelsystem entwickelt haben. Nach Ausbildung eines vollständigen Wurzelsystems nehmen die Pflanzen zusätzlich Wasser über die Front, durch die Gitterplatte hindurch, sei es durch natürliche oder künstliche Beregnung, auf. Die Bewässerung über das Bewässerungssystem 8 wird aber vorzugsweise kontinuierlich fortgesetzt.

Das Bewässerungssystem 8 ist zwischen Fassadenbegrünungselement 1 und der zu begrünenden Fassade angeordnet. Es ist also getrennt von den Fassadenbegrünungselementen 1 ausgebildet und so konstruiert, dass die Fassadenbegrünungselemente ohne größeren Aufwand und ohne Demontage des Bewässerungssystems von der Fassade abgenommen werden können. Im gezeigten Fall umfasst das Bewässerungssystem 8 einen Tropfschlauch 80, der sich über die gesamte Breite der an der Fassade befestigten Fassadenbegrünungselemente 1 erstreckt. Aus dem Tropfschlauch 80 tropft Wasser auf eine Befeuchtungsbahn 81, die beispielsweise aus einem Vliesmaterial besteht und das Wasser über Schwerkraft und Kapillarkräfte weiterleitet. Die Befeuchtungsbahn 81 ist an der Tragkonstruktion 7 befestigt und erstreckt sich in ihrem unteren Bereich abschnittsweise parallel zu der Bewässerungsbahn 6, welche aus dem Fassadenbegrünungselement 1 heraus um die untere Außenwand 40 herum auf die Rückseite der Rückplatte 2 geführt ist. In diesem rückwärtigen Bereich der Rückplatte 2 liegen Bewässerungsbahn 6 und Befeuchtungsbahn 81 bereichsweise aneinander an, so dass ein Feuchtigkeitstransfer zwischen beiden stattfinden kann. Das auf diese Weise auf die Bewässerungsbahn 6 übertragene Wasser zieht sich erneut entlang der Bewässerungsbahn 6 bis ins Innere des Fassadenelementes 1 und gelangt so an die rückwärtigen Öffnungen 50 der Pflanzkörbe 5, von wo es durch die Pflanzen aufgenommen werden kann. Die Befeuchtungsbahn 81 erstreckt sich bevorzugt ebenfalls im Wesentlichen über die gesamte Breite eines Fassadenbegrünungselementes. Es ist jedoch gegebenenfalls auch ausreichend, mehrere Streifen von Befeuchtungsbahnen nur im Bereich der Pflanzkörbe zu verwenden.

Im gezeigten Fall ist ein Tropfschlauch 80 nur im oberen Bereich, hinter der obersten Reihe der Fassadenbegrünungselemente 1 des Fassadenbegrünungssystems 10 vorhanden. Die Bewässerung der Fassadenbegrünungselemente der unteren Reihen erfolgt ebenfalls über das aus diesem Tropfschlauch 80 zudosierte Wasser. Dies geschieht dadurch, dass von den Bewässerungsbahnen 6 der obersten Reihe der Fassadenbegrünungselemente 1 Wasser nach unten auf die darunter liegenden Fassadenbegrünungselemente 1 abgegeben wird. Für eine gezielte Wasserabgabe ist hierzu im unteren Bereich des jeweils obersten Fassadenbegrünungselementes 1 eine Tropfkante 82 ausgebildet, die verhindert, dass Wasser bis zu der Tragkonstruktion 7 oder der Wand W gelangt, sondern vielmehr auf die angrenzende darunter liegende Bewässerungsbahn 6 transferiert wird. Die Querschnittsform der Fassadenbegrünungselemente ist in diesem Fall also nicht exakt parallelogrammartig, sondern im unteren, rückwärtigen Bereich ist eine abgeschnittene Kante vorhanden. Im Inneren des Fassadenbegrünungselementes wird im Bereich der abgeschnittenen unteren Kante eine Mulde gebildet. Diese kann einen Wasservorrat aufnehmen, der für eine kontinuierliche und gleichmäßige Befeuchtung der Bewässerungsbahn 6 sorgt. Die Form der untersten Reihen der Fassadenbegrünungselemente entspricht derjenigen der oberen Reihe. So wird durch Abgabe von Wasser von der zweiten Reihe der Fassadenbegrünungselemente 1 die dritte Reihe bewässert usw. Auf diese Weise kann der konstruktive Aufwand bei der Bewässerung der Fassadenbegrünungselemente auf ein Minimum beschränkt werden. Alle Fassadenbegrünungselemente 1 können ohne weiteren Aufwand von der Fassade abgenommen werden. Weder ist das Lösen von Verbindungen mit Hilfe von Werkzeugen dafür erforderlich noch das Abmontieren von Bewässerungsvorrichtungen.

## Patentansprüche

1. Fassadenbegrünungselement (1), umfassend eine Rückplatte (2) und eine von dieser beabstandete Gitterplatte (3), die mit der Rückplatte (2) durch einen Außenrand (4) verbunden ist und wenigstens eine Öffnung (30) aufweist, deren Öffnungsfläche größer als die der übrigen Öffnungen (31) des Gitters ist, wobei im Bereich der Öffnung (30) ein zur Öffnung (30) hin offener Pflanzkorb (5) angeordnet ist,
**dadurch gekennzeichnet,**
**dass** der Pflanzkorb (5) als stabilisierendes Verbindungselement Rückplatte (2) und Gitterplatte (3) derart miteinander verbindet, dass verhindert wird, dass die Gitterplatte (3) und die Rückplatte (2) auseinandergedrückt werden und das Fassadenbegrünungselement (1) sich aufwölbt.

2. Fassadenbegrünungselement nach Anspruch 1,
**dadurch gekennzeichnet,**
**dass** der Pflanzkorb (5) auf seiner zur Rückplatte (2) weisenden Seite zumindest teilweise und vorzugsweise vollständig offen ist und zwischen dieser rückseitigen Öffnung (50) und der Rückplatte (2) eine Bewässerungsbahn (6), insbesondere ein Vliesmaterial, geführt ist, das bis auf die von der Gitterplatte (3) abgewandte Seite der Rückplatte (2) verläuft.

3. Fassadenbegrünungselement nach Anspruch 1 oder 2,
**dadurch gekennzeichnet,**
**dass** die zwischen Gitterplatte (2) und Rückwand (2) verlaufenden Seitenwände (51) des Pflanzkorbs (5) Durchwurzelungsöffnungen (52) aufweisen.

4. Fassadenbegrünungselement nach einem der Ansprüche 1 bis 3,
**dadurch gekennzeichnet,**
**dass** der Pflanzkorb (5) auf dem der Gitterplatte (3) benachbarten Öffnungsrand (53) befestigte und auf der Gitterplatte (3) aufliegende Anpressflächen (54) aufweist.

5. Fassadenbegrünungselement nach einem der Ansprüche 1 bis 4,
**dadurch gekennzeichnet,**
**dass** der Bereich um den Pflanzkorb (5) herum mit Pflanzsubstrat (9) und gegebenenfalls, insbesondere benachbart zur Gitterplatte (3), mit gekörntem mineralischen Material (90) befüllt ist.

6. Fassadenbegrünungselement nach einem der Ansprüche 1 bis 5,
**dadurch gekennzeichnet,**
**dass** es an einer Tragkonstruktion (7) befestigt ist, die eine Bewässerungsvorrichtung (8) umfasst, mit welcher die auf die Rückseite der Rückplatte (2) geführte Bewässerungsbahn (6) befeuchtet wird.

7. Fassadenbegrünungselement nach Anspruch 6,
**dadurch gekennzeichnet,**
**dass** die Bewässerungsvorrichtung (8) einen Tropfschlauch (80) umfasst, der eine Befeuchtungsbahn (81), insbesondere aus Vliesmaterial, befeuchtet, die in Kontakt mit der Bewässerungsbahn (6) ist.

8. Fassadenbegrünungselement nach einem der Ansprüche 1 bis 7,
**dadurch gekennzeichnet,**
**dass** es in Hängerichtung im Längsschnitt senkrecht zu Gitter- und Rückplatte einen im Wesentlichen parallelogrammartigen Querschnitt mit von der Rückplatte (2) in Richtung auf die Gitterplatte (3) nach oben ansteigenden Außenrändern (4) aufweist.

9. Fassadenbegrünungssystem (10),
**dadurch gekennzeichnet,**
**dass** es mehrere Fassadenbegrünungselemente (1) nach einem der Ansprüche 1 bis 8 umfasst.

## Claims

1. A facade greening element (1), comprising a rear plate (2) and a grid plate (3) which is spaced therefrom and is connected to the rear plate (2) by an outer edge (4) and comprises at least one opening (30), the opening area of which is larger than that of the remaining openings (31) of the grid, a plant basket (5) open toward the opening (30) being arranged in the region of the opening (30),
**characterized in that**
the plant basket (5), as a stabilizing connecting element, connects the rear plate (2) and the grid plate (3) such that the grid pate (3) and the rear plate (2) are prevented from being pushed apart and the facade greening element (1) from arching outward.

2. The facade greening element according to claim 1,
**characterized in that**
the plant basket (5) is at least partially and preferably completely open on its side facing the rear plate, and an irrigation web (6), in particular a nonwoven fabric, is guided between this rear-sided opening (50) and the rear plate (2), which extends to the side of the rear plate (2) facing away from the grid plate (3).

3. The facade greening element according to claim 1 or 2,
**characterized in that**
the side walls (51) of the plant basket (5) extending between the grid plate (2) and the rear wall (2) comprise through-openings (52) for roots.

4. The facade greening element according to any one of claims 1 to 3,
**characterized in that**
the plant basket (5) comprises pressing surfaces (54) fixed to the opening edge (53) adjacent the grid plate (3) and resting on the grid plate (3).

5. The facade greening element according to any one of claims 1 to 4,
**characterized in that**
the region around the plant basket (5) is filled with plant substrate (9) and, where appropriate, with granular mineral material (90), in particular adjacent the grid plate (3).

6. The facade greening element according to any one of claims 1 to 5,
**characterized in that**
it is fixed to a supporting structure (7) comprising an irrigation device (8), by means of which the irrigation web (6) guided on the rear side of the rear plate (2) is moistened.

7. The facade greening element according to claim 6,
**characterized in that**
the irrigation device (8) comprises a drip hose (80), which moistens a moistening web (81), in particular of nonwoven fabric, which is in contact with the irrigation web (6).

8. The facade greening element according to any one of claims 1 to 7,
**characterized in that**
in the hanging direction in a longitudinal sectional view perpendicular to the grid plate and rear plate, it has an essentially parallelogram-type cross-section with outer edges (4) rising upward from the rear plate (2) in the direction of the grid plate (3).

9. A facade greening system (10),
**characterized in that**
it comprises multiple facade greening elements (1) according to any one of claims 1 to 8.

## Revendications

1. Elément (1) pour la végétalisation de façades, comprenant une plaque arrière (2) et une plaque en forme de grille (3) qui est espacée de celle-ci et est réunie à la plaque arrière (2) par une bordure extérieure (4), et qui comprend au moins une ouverture (30) dont l'aire d'ouverture est supérieure à celle des ouvertures restantes (31) de la grille, un panier (5) pour des végétaux ouvert vers l'ouverture (30) étant disposé dans la zone de l'ouverture (30),
**caractérisé en ce que**
le panier (5) pour les végétaux, en tant qu'élément de liaison stabilisateur, réunit la plaque arrière (2) et la plaque en forme de grille (3) de telle sorte que la plaque en forme de grille (3) et la plaque arrière (2) soient empêchées d'être écartées et séparées l'une de l'autre, et que l'élément (1) pour la végétalisation de façades ne se torde vers l'extérieur.

2. Elément (1) pour la végétalisation de façades selon la revendication 1,
**caractérisé en ce que**
le panier (5) pour les végétaux est au moins partiellement, et de manière préférée entièrement, ouvert sur son côté orienté vers la plaque arrière, et un voile d'irrigation (6), en particulier un textile en non tissé, est guidé entre cette ouverture (50) côté arrière et la plaque arrière (2), qui s'étend jusqu'au côté de la plaque arrière (2) orienté de façon opposée à la plaque en forme de grille (3).

3. Elément (1) pour la végétalisation de façades selon la revendication 1 ou 2,
**caractérisé en ce que**
les parois latérales (51) du panier (5) pour les végétaux s'étendant entre la plaque (3) en forme de grille et la paroi arrière (2) comprennent des ouvertures de passage (52) pour les racines.

4. Elément (1) pour la végétalisation de façades selon l'une quelconque des revendications 1 à 3,
**caractérisé en ce que**
le panier (5) pour les végétaux comprend des surfaces de pression (54) fixées sur le bord (53) de l'ouverture adjacent à la plaque en forme de grille (3) et reposant sur la plaque en forme de grille (3).

5. Elément (1) pour la végétalisation de façades selon l'une quelconque des revendications 1 à 4,
**caractérisé en ce que**
la zone située autour du panier (5) pour les végétaux est remplie d'un substrat (9) pour des végétaux et, lorsque cela est approprié, avec un matériau minéral granulaire (90), en particulier de manière adjacente à la plaque en forme de grille (3).

6. Elément (1) pour la végétalisation de façades selon l'une quelconque des revendications 1 à 5,
**caractérisé en ce que**
il est fixé à une structure de support (7) comprenant un dispositif d'irrigation (8) au moyen duquel le voile d'irrigation (6) guidé sur la face arrière de la plaque arrière (2) est humidifié.

7. Elément (1) pour la végétalisation de façades selon la revendication 6,
**caractérisé en ce que**
le dispositif d'irrigation (8) comprend un tube de goutte-à-goutte (80), qui humidifie un voile d'humidification (81), en particulier un textile en non tissé, qui est en contact avec le voile d'irrigation (6).

8. Elément (1) pour la végétalisation de façades selon l'une quelconque des revendications 1 à 7,
**caractérisé en ce que**
dans la direction de suspension selon une vue en coupe longitudinale perpendiculaire à la plaque en forme de grille et à la plaque arrière, il présente une section transversale essentiellement de type parallélogramme avec des bordures extérieures (4) partant vers le haut depuis la plaque arrière (2) dans la direction de la plaque en forme de grille (3).

9. Système (10) pour la végétalisation de façades,
**caractérisé en ce que**
il comprend de multiples éléments (1) pour la végétalisation de façades selon l'une quelconque des revendications 1 à 8.
